# EUROPEAN PATENT APPLICATION

(11) **EP 2 375 121 A2**
(43) Date of publication of application: **12.10.2011**
(21) Application number: 11001875.1
(22) Date of filing: 29.11.2008
(51) Int. Cl.: F17C 5/06, F17C 7/00

(54) **Warming system for high pressure gas storage devices utilizing the Joule-Thomson effect**

(30) Priority: 30.11.2007 US 947813; 30.11.2007 US 947816; 30.11.2007 US 947820
(62) Divisional of application: 08870979.5
(71) Applicant: Honda Motor Co., Ltd., Minato-ku Tokyo 107-8556 (JP)
(72) Inventor: Handa, Kiyoshi, Raymond- OH 43067-9705 (US)
(74) Representative: Beresford, Keith Denis Lewis

(57) **Abstract**

A warming system is disclosed for hydrogen gas stored under high pressure in an on board motor vehicle tank. The system enables the temperature of the gas within the tank and the gas flow control components associated with one or more bosses at an end of the tank to be increased to a level above the lower design temperature tolerance limit of the tank and flow control components. The system comprises a high pressure hydrogen gas storage tank (140), a conduit (110out) for gas flow leading from high pressure gas stored in the tank to a pressure regulator that reduces the pressure of the gas flowing in the conduit to a level suitable for use in the vehicle power plant, and a heat exchange device (311) operatively interconnected with the conduit for gas flow disposed after the pressure regulator and before the gas inlet to the vehicle power plant, whereby the Joule-Thomson effect in gas flowing through the conduit is captured as heat and the heat captured is utilized to warm the gas within the tank and/or the flow control components of the tank assembly as the high pressure hydrogen gas is utilized during vehicle operation.

## Description

### FIELD OF THE INVENTION

The invention relates to a heating system for high pressure storage tanks for hydrogen, CNG and other industrial gases, by compensating for thermal and mechanical stresses caused by a low system temperatures resulting from gas decompression in a vehicle tank during driving as fuel gas is depleted from a storage tank and environmental exposure of storage tanks in low temperature climate conditions. Heating is accomplished by 1) heating the tank system by passing an electrical current through a resistive structural material from which the tank is formed, 2) Utilizing an electrical induction heating system to warm a liner in the tank or the polymer fiber composite forming the tank shell, 3) utilizing the Joule-Thomson effect to recover heat from high pressure gas exhausted from the tank and directing the recovered heat to the gas remaining in the tank and/or 4) combining either or both of heating the tank with an electrical current and utilizing an electrical induction system with a Joule-Thomson recovery heater. Warming reduces the risk of a fuel gas leak in cold climate driving conditions, tank durability is increased the because the internal temperature differences between the stored gas and the tank are reduced, and temperature differences between seals and gas flow devices associated with the tank and gas flow controls, that otherwise would cause mechanical stresses, are minimized.

### BACKGROUND OF THE INVENTION

Vehicles powered by compressed natural gas (CNGV) and hydrogen gas (FCV) typically include on board high pressure gas fuel tanks that may include gas absorbing materials within the tank interior. During driving, the gas inside the tanks becomes cold, caused by the tank pressure decreasing when gas is consumed by the vehicle power plant resulting in decompression of the tank. Gas absorbing materials used in the tank interior will absorb the intrinsic heat in the gas during the gas discharge from the tank during vehicle operation. In cold climates, the internal gas temperature in the tank can drop to -60°C or below, a temperature that may be below the permissible operating temperature of 0-rings, or other rubber seals, or gas flow controls in the tank. An excessively low temperature in the tank may upset design tolerance limits for the seals and flow controls and cause the stored gas to leak as a result of temperature caused stresses in the tank system assembly. As an example, when the ambient temperature is -20 °C, the reduction of internal tank temperature by an additional -40°C due to gas decompression effects will result in an internal temperature in the gas tank of -60°C. Expansion and contraction of the tank and the component parts of the gas flow system associated with the tank may produce adverse mechanical stress effects. In the specification, reference to high pressure gas powered vehicles includes the utilization of hydrogen gas to power fuel cells (FCVs) and internal combustion engines and the use of correlates with the use of the invention with compressed natural gas to power internal combustion engines (CNGVs). Although hydrogen is typically referred to in the specification and examples, the term "hydrogen" is, in most instances, intended to be interchangeable with CNG and other fuel gases. Fuel gases are referred to as a "gas" or "high pressure gas."

### OBJECTS OF THE INVENTION

It is an object of the present invention to provide warming systems for a high pressure tank utilizing the inherent electrically conductive characteristics of a carbon fiber tank and/or the tank liner to warm the tank and the gas therein such as by passing a current through the resistive material from which the tank is formed or using an electrical induction heating coil wound around the tank whereby electrical current passing through the coil warms the tank wall and/or the tank liner and/or to utilize Joule Thomson heat recovered or captured to warm an internal radiator or heat exchanger (HEX) wherein the Joule Thomson heat is radiated and warms the remaining gas stored in the tank.

It is a further object to reduce the risk of a fuel gas leak in cold climate driving conditions caused by excessively low tank and / or gas temperatures. As a result, tank durability is increased, the internal temperature difference between the stored gas in the tank and the tank wall is reduced, and other components of the tank gas flow and control system are warmed. The lower extent of temperature fluctuations of a driving cycle in the tank is reduced.

The invention is described more fully in the following description of the preferred embodiment considered in view of the drawings in which:

### BRIEF DESCRIPTION OF THE SEVERAL VIEWS OF THE DRAWINGS

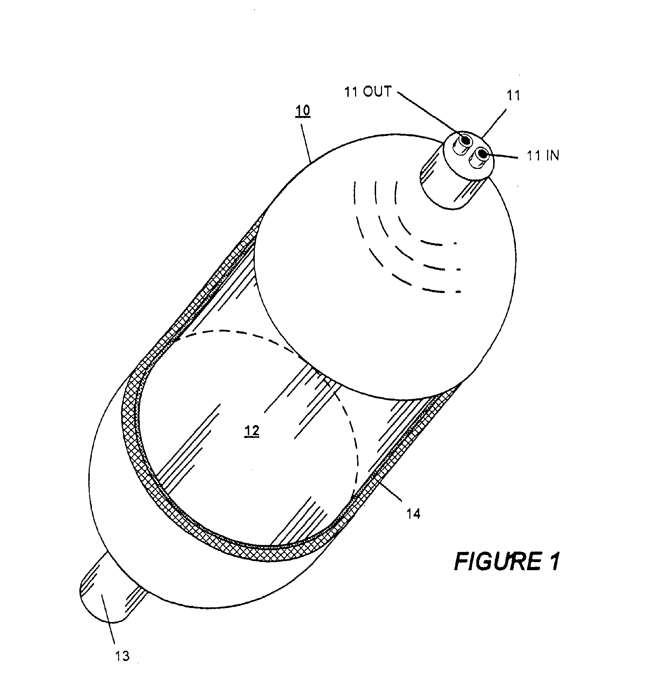

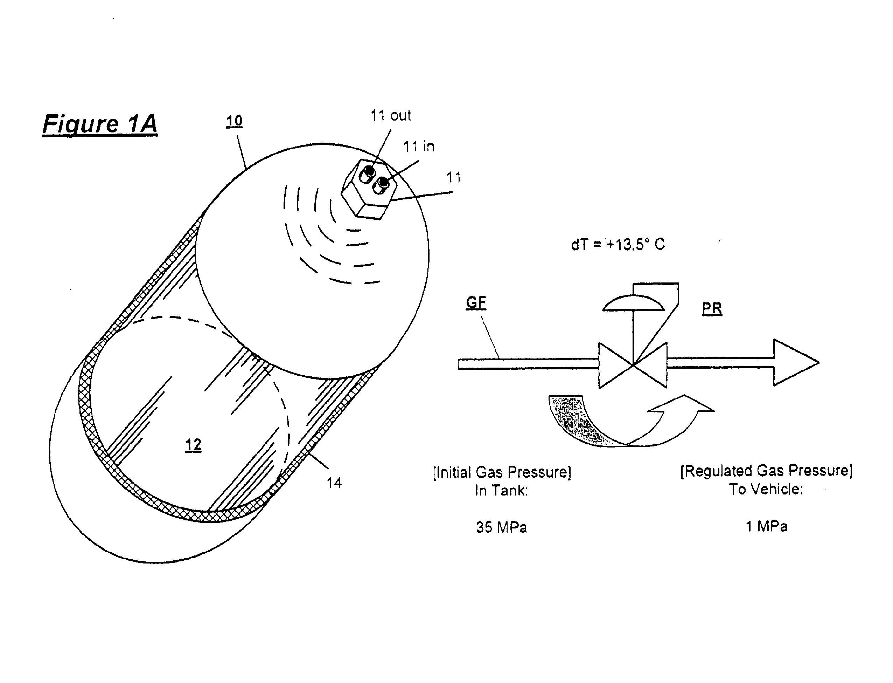

Figure 1 is a cut away view showing a typical cylindrical high pressure gas storage tank formed from a carbon composite material wherein a carbon fiber strand material is impregnated within an epoxy or other resin binder. The tank shown includes a metal boss at each end and inlet and outlet gas flow components embedded within the boss at one end, and an interior volume.

Figure 1A is a diagram showing the calculation of the heat recovery available for gas warming utilizing the Joule Thompson effect as hydrogen stored within the tank is decompressed while used for vehicle operation. A carbon fiber resin composite shell tank 14 includes outer wall 14a and liner 14b, an interior volume for gas storage 12, boss 11, and gas outflow conduit 11 out. Figure 1A illustrates the Joule Thompson effect. Gas stored under high pressure, 30-35 MPa, in the tank volume flows through outlet conduit GF through a pressure regulator PR lowering gas pressure to 1 MPa, wherein Joule Thompson heat energy is released.

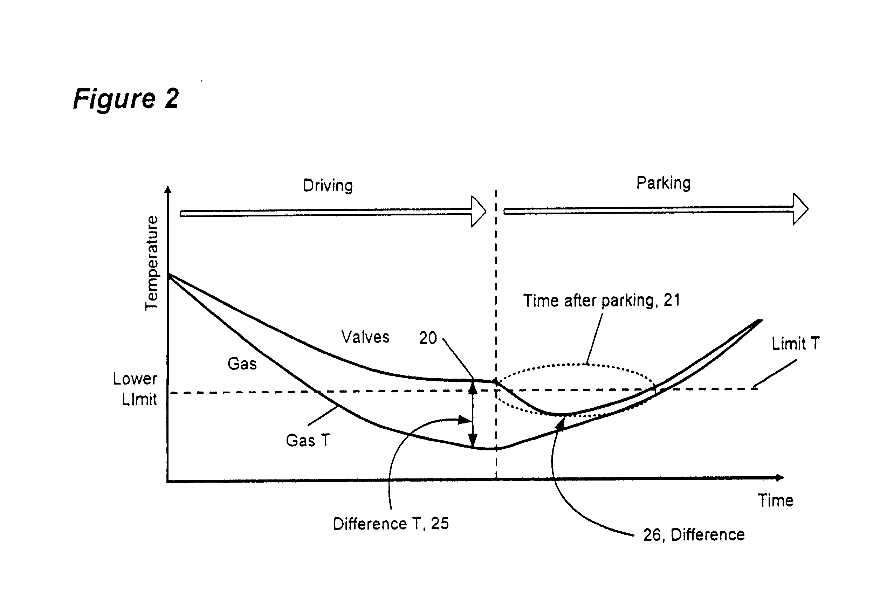

Figure 2 is a chart of gas and valve temperatures of the tank plotted against a time axis depicting relative temperatures of the gas within the tank and the metal boss elements during the vehicle conditions of driving and parking. The cooling of the metal components after driving is shown wherein valve temperatures are below the lower tolerance limit after driving.

Figures 3-6 and Figures 7A, 7B, 8A, 8B and 9 show features of a warming system utilizing the electrically conductive characteristics of the fiber composite material from which a tank is formed.

Figure 3 is a side view of a tank and warming system of the invention wherein an electric power source is interconnected with embedded electrodes connecting with the conductive fiber elements forming the tank wall to provide heating for the gas and tank.

Figure 4 is a side view of a warming system of the invention wherein an electric power source is interconnected to the conductive metal bosses extending from opposite ends at either side of the tank.

Figure 5 is a side view of a warming system of the invention wherein an electric power source is interconnected to intrinsically formed conductive fiber extensions leading from each of the opposite sides of the tank ends.

Figure 6 is a side view of a warming system of the invention wherein electrodes are implanted within the tank wall at locations predetermined on the tank based on the conductivity properties of the composite material forming the tank. The electrodes are interconnected with an electric power source.

Figure 7A is an enlarged cross section of tank wall segment 7A→ ←7A through the tank wall shown in Figure 6. Figure 7B shows enlarged cross sections of a tank wall segment showing an alignment of fibers. In each Figure, the fibers comprise a mixture of conductive filler and carbon fiber embedded in an epoxy material forming the composite.

Figure 8A shows, in a side cross section detail, a tank including a conductive / resistive composite structure having an interior metal liner with an insulating layer sandwiched between the conductive composite tank structure and a metal liner in the tank.

Figure 8B is a cross section through section 8B→ ←8B of the metal lined tank wall of Figure 8A.

Figure 9 illustrates a temperature control system utilized in the invention with the heating system of Figure 3 shown as an example.

Figures 10A and 10B, 11A, and 11B, 12A and 12B, 13, 14A, 14B and 14C show examples of warming systems utilizing an induction coil associated with the tank perimeter.

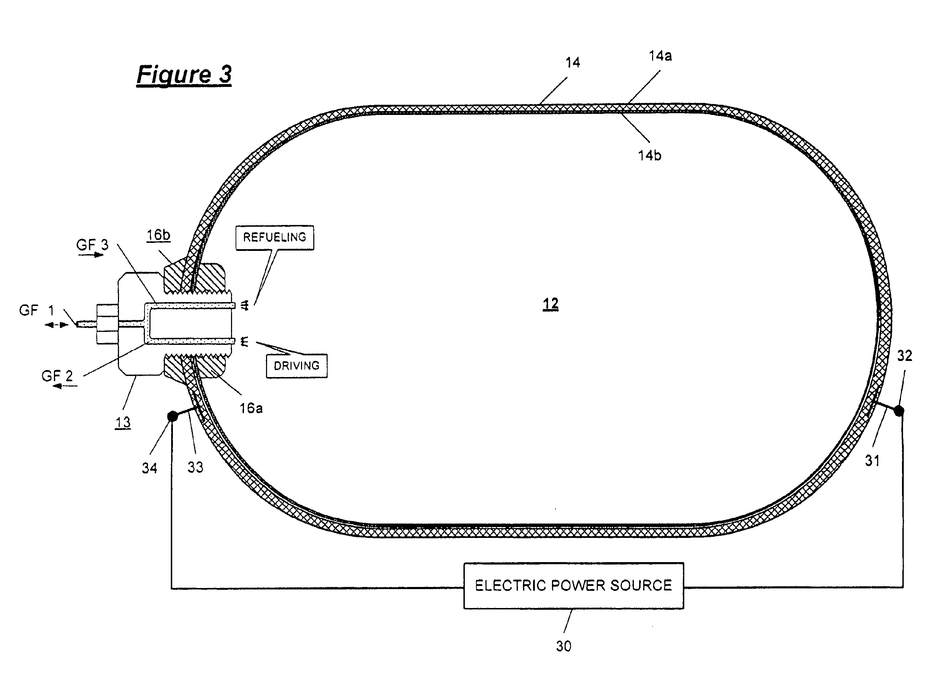

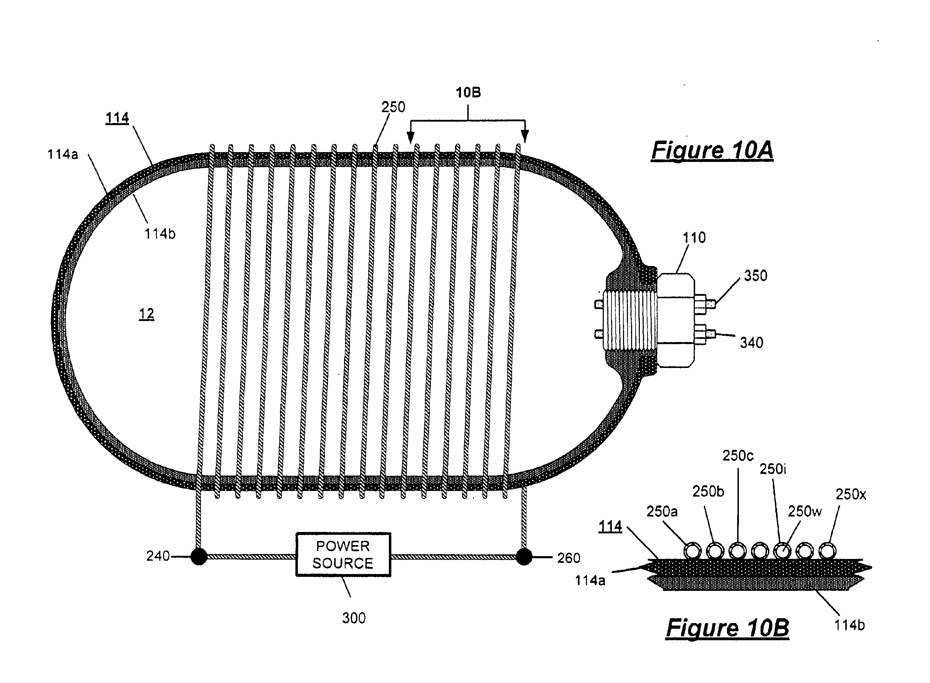

Figure 10A is a side view of a tank and warming system of the invention wherein an induction coil wound around the external diameter of the tank is interconnected with an electric power source to provide heating for the gas and tank. Figure 10B is a cross section of the upper side of the tank wall in Figure 3A indicated as 10B→ ←10B.

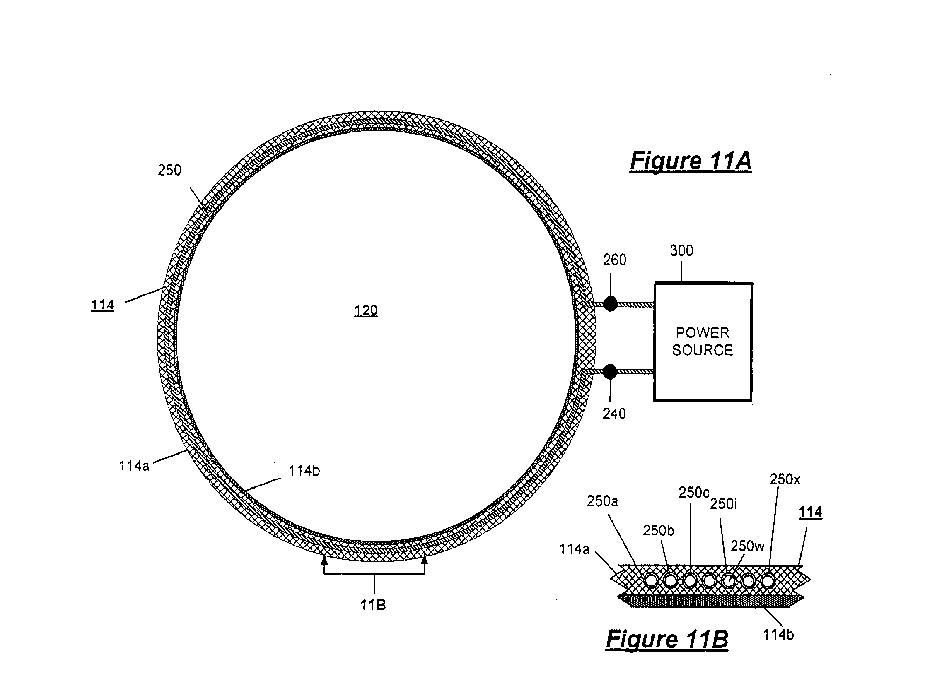

Figure 11A is a cross section view of an example of a warming system of the invention wherein the induction coil is embedded within the tank wall. Figure 11B is a cross section of the longitudinally extending side of the tank wall in Figure 11A indicated as 11B→ ←11 B.

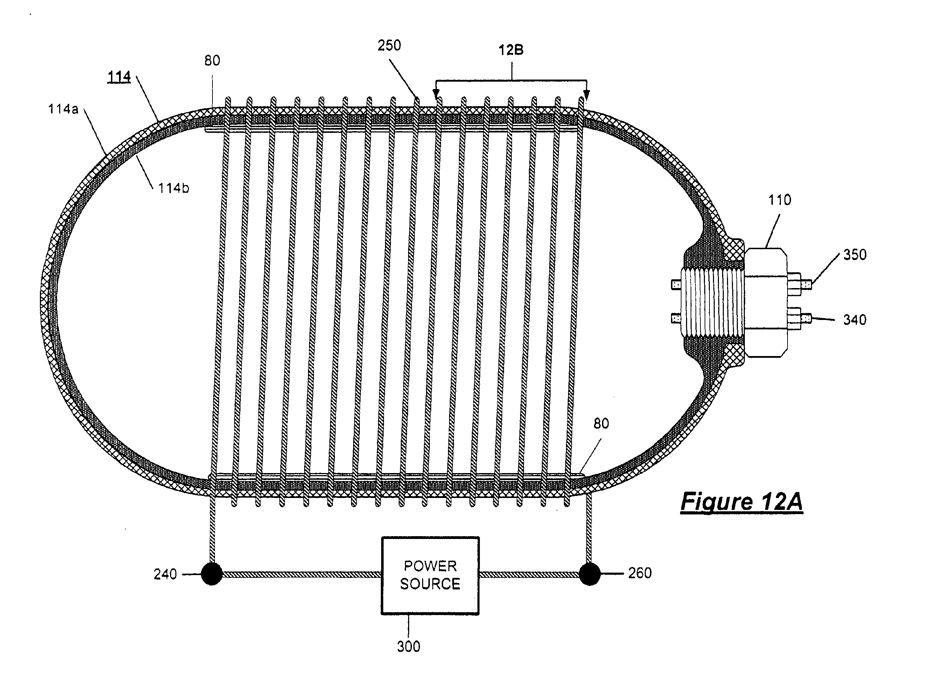

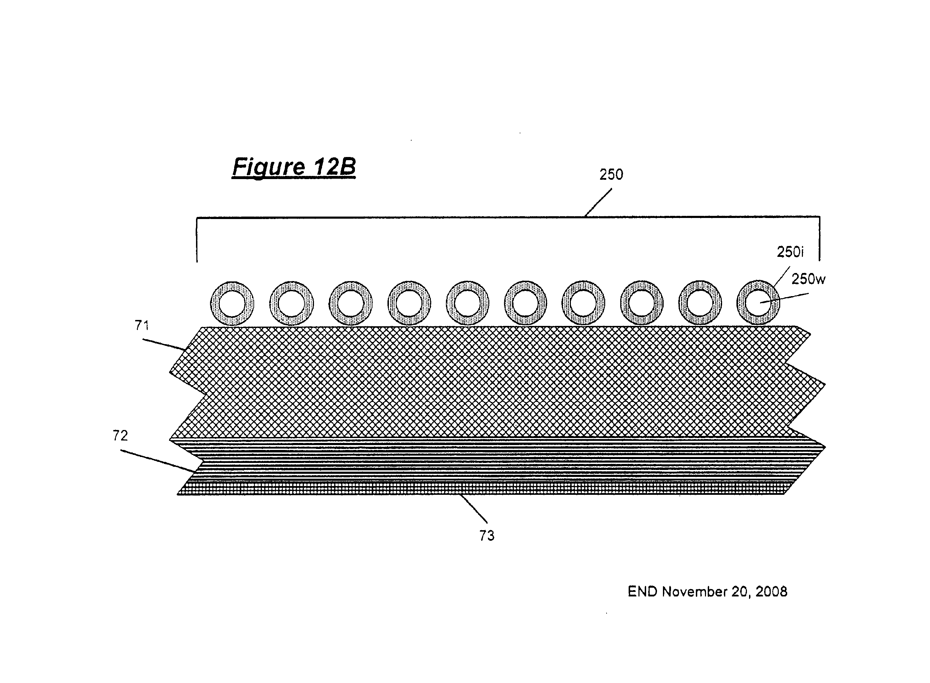

Figure 12A is a cross section view of an example of a warming system of the invention wherein the induction coil is wound around the external diameter of a tank that includes a metal liner. Figure 12B is a cross section of a longitudinally extending side of the tank wall in Figure 12A indicated as 12B→ ←12B showing the induction coil, fiber tank shell and metal liner.

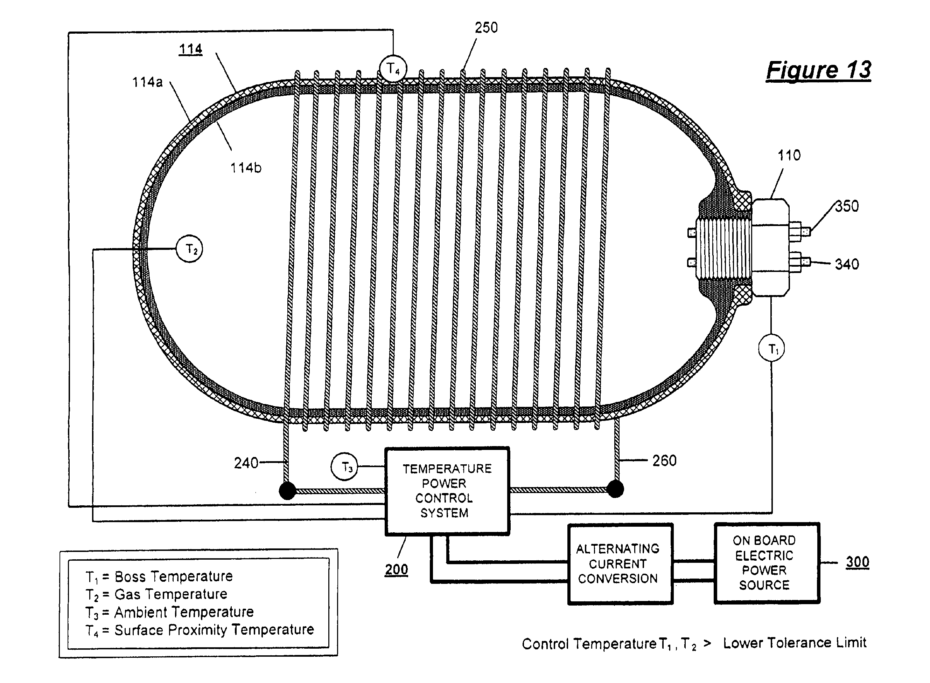

Figure 13 illustrates a temperature control system utilized in the invention showing the heating system of Figure 10A as an example.

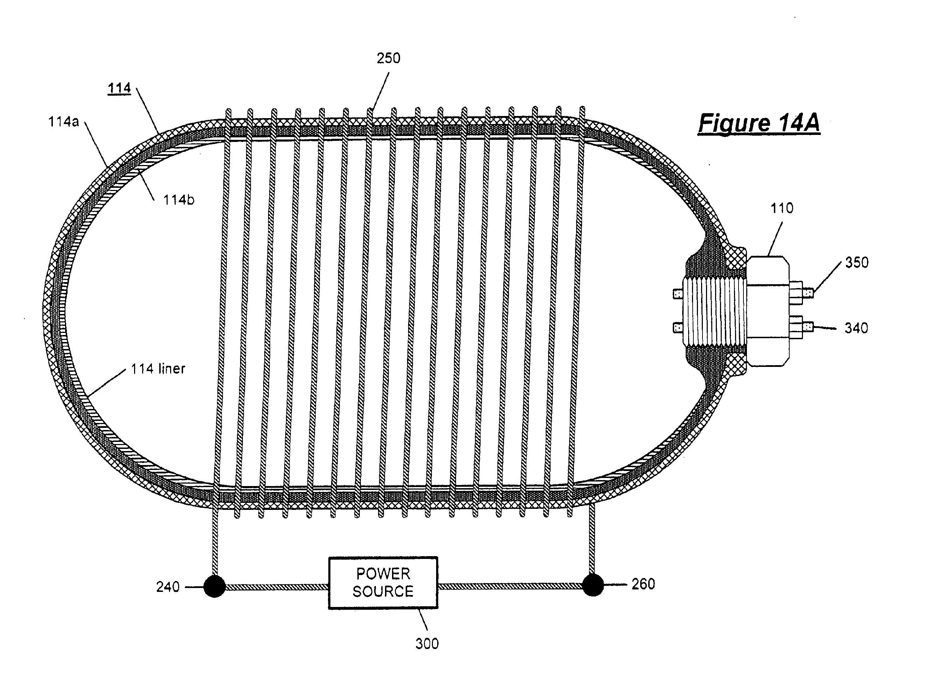

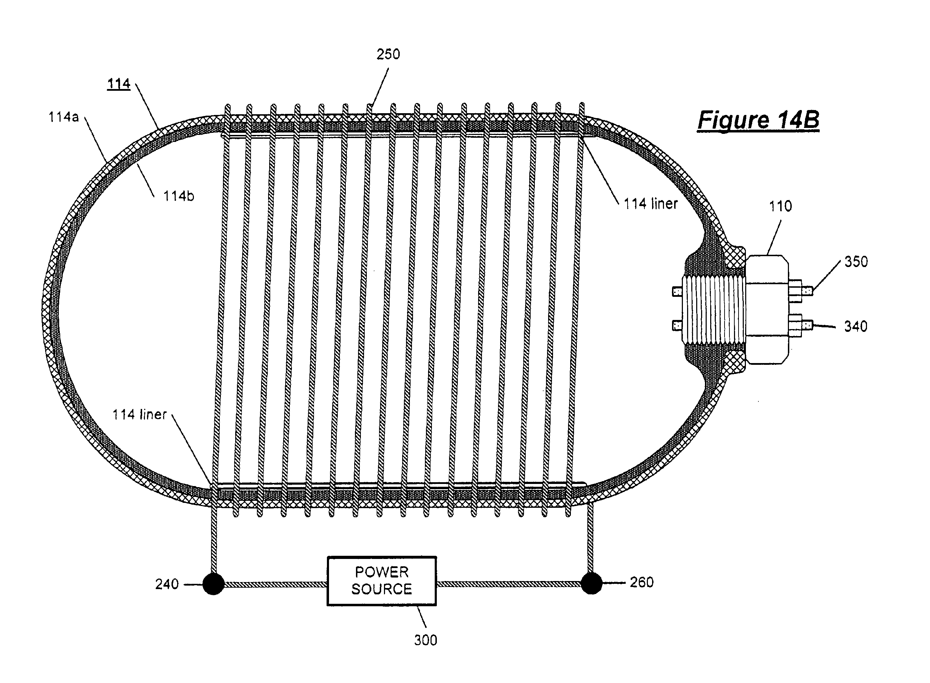

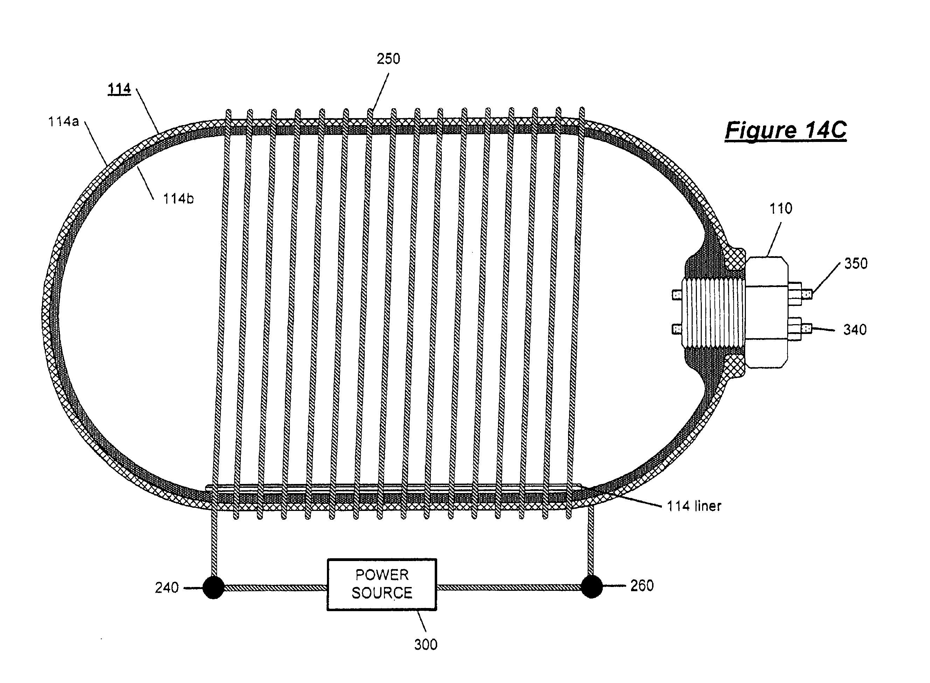

Figures 14A, 14B and 14C show additional configurations of inductively active materials or compositions included in the tank structure to provide additional heat to the bottom area and achieve a more uniform temperature.

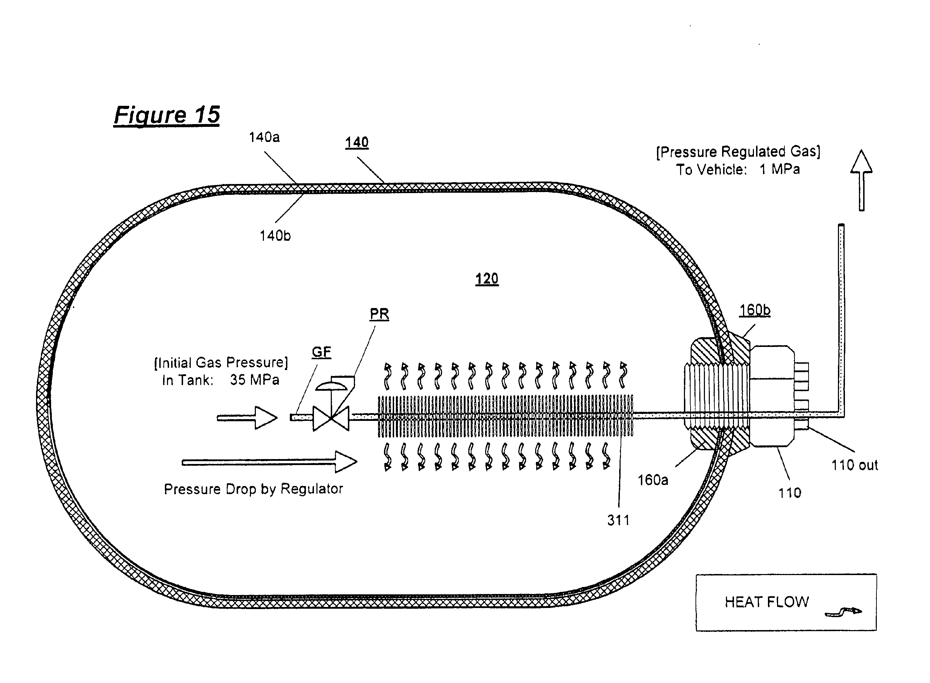

Figures 15, 16, 17, and 18 depict examples of the system utilizing warming heat recovered through a Joule-Thomson system.

Figure 15 is a side view of a tank structure using a heat exchanger internal to the tank heating the hydrogen gas output during tank depletion using the Joule Thomson energy of the hydrogen gas outflow during the decompression of the tank as the vehicle is driven.

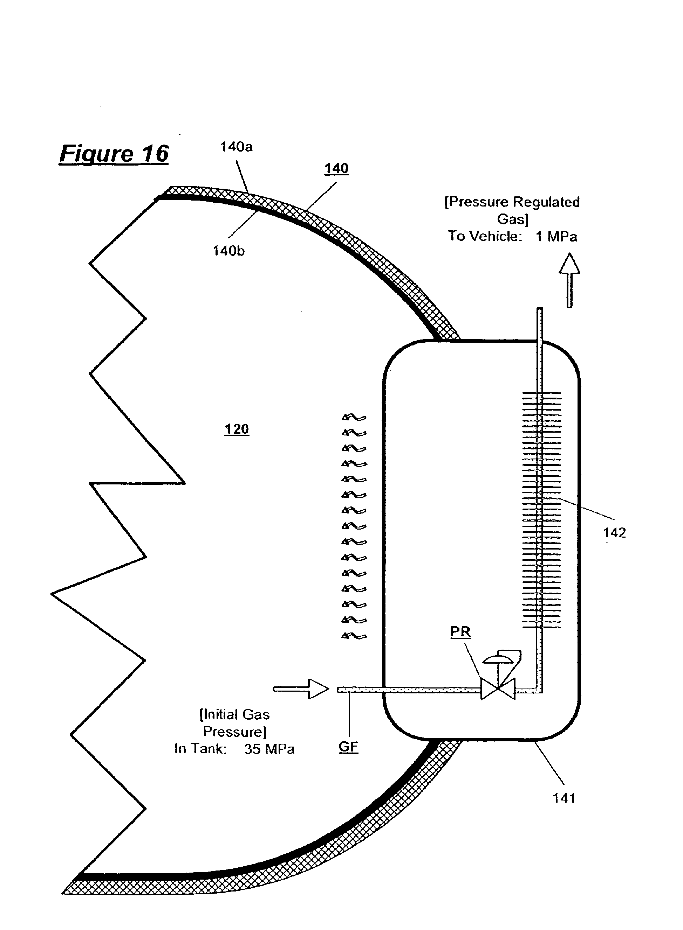

Figure 16 is a side view of a warming system of the invention wherein the heat exchange of Joule Thomson energy occurs within a metal tank boss that houses embedded tank flow control devices.

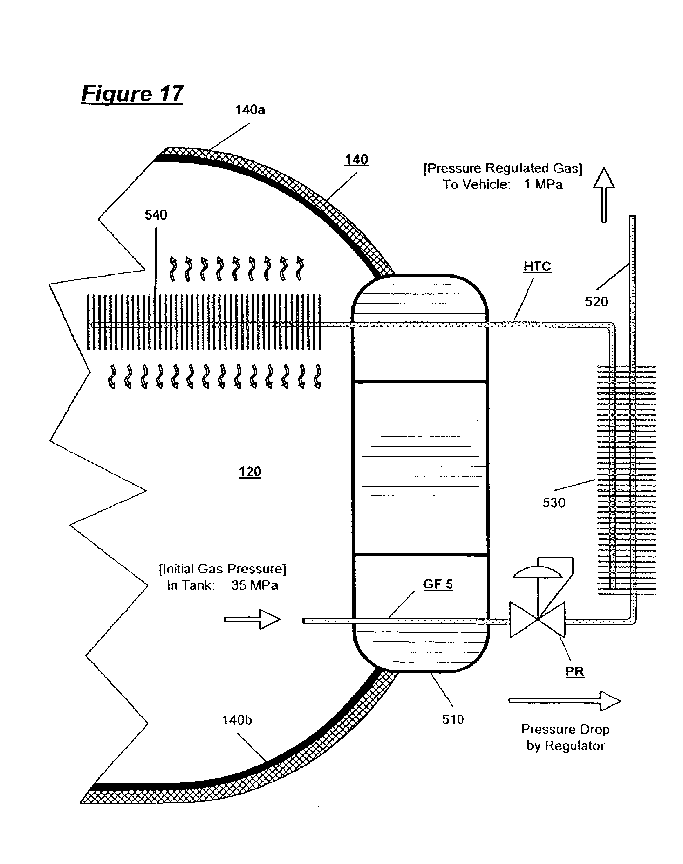

Figure 17 is a side view of a tank structure using a heat exchanger external to the tank heating the gas through an internal heat exchanger using the stored Joule Thomson energy of hydrogen decompression as an energy source for heating in the gas flow system.

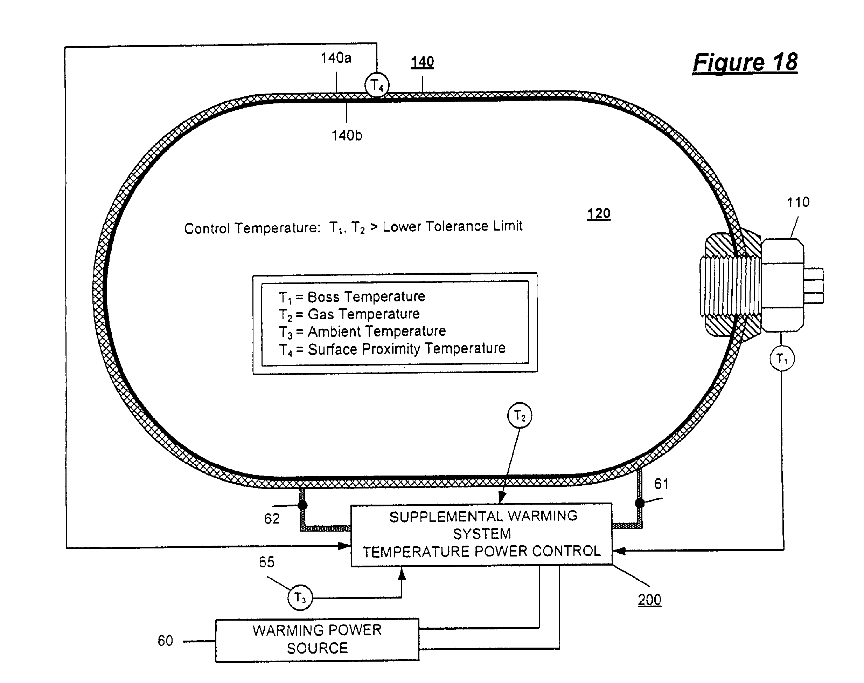

Figure 18 illustrates a temperature control system utilized wherein Joule Thomson heat recovery energy is combined with a supplemental warming system.

### DETAILED DESCRIPTION OF THE INVENTION

In brief, the invention provides a warming system for high pressure gas storage tanks utilized on high pressure gas fueled vehicles including vehicles powered by compressed natural gas, CNG, and fuel cell and internal combustion engines powered by hydrogen gas. In many examples, such vehicles include gas fuel tanks that may include gas absorbing materials in the interior of the tank. During driving, the gas cools because a decrease in the tank pressure occurs. When a vehicle tank includes gas absorbing materials, the gas absorbing materials absorb heat during the gas discharge from the tank further contributing to the cooling effect. Environmentally, a typical ambient temperature is approximately 20°C. In cold climates, the internal gas temperature in a vehicle tank can drop to -60°C or below, a temperature that may be below the permissible operating temperature range of O-ring and/or other rubber or polymer seals used in the tank and the port inlet and outlet metal part assemblies that control the inflow and outflow of gas to and from the storage tank. Below the acceptable temperature range, variances allowable for seals, valves, control devices, and the like, may be exceeded by thermally caused mechanical variations in the tank and associated assemblies. Leakage of the stored gas may result.

With reference to Figure 1, high pressure tanks are typically cylindrical with semi spherically shaped domed ends and are formed from a carbon composite shell, a mixture of resin and carbon fiber and may also include supplemental shells such as an outer shell and an interior liner sandwiching a carbon fiber middle layer. Figure 1 shows a typical high pressure gas storage tank 10 having an interior volume 12 for the storage of gas is shown with sidewall 14, including a first boss 11 and second boss 13 at either end. A gas inlet and gas outlet are shown at boss 11 as 11 in and 11 out. A fiber sidewall my usually include an interior liner.

Driving and parking temperature conditions in the vehicle tank system are charted in Figure 2. During driving, the gas temperature, Gas T, may exceed the lower tolerance limit, for example, of the flow control system, Limit T, by the temperature difference shown as Difference T, 25. Figure 2 illustrates, a parking condition, wherein, with time, the temperature 20 of the valve/control/mechanical parts system cools to a difference 25, such that, in the period after parking 21, the valve temperature 20 cools to temperature 26, below the lower acceptable limit of temperature tolerance.

### EXAMPLE I

In a first example shown in Figures 3-6 and Figures 7A, 7B, 8A, 8B and 9, the invention provides a solution that can efficiently warm the storage tank utilizing intrinsic electrical conductivity characteristics of the fiber and binder materials utilized in the fabrication of the tank. In examples, the carbon fiber layer in the tank itself can be used as a heater to warm the gas tank itself. Because carbon fiber layer has an electrical conductivity, the fiber can be heated up when an electrical potential is applied to an appropriate resistive expanse of a tank section. In another example, the metal end ports of the tank can be used as electrical terminals applying the current to the conductive tank fiber. Intrinsic extensions fabricated from the tank material and interconnected with the conductive tank fiber can be used as electrical terminals. In other examples, electrical terminals can be installed in the tank wall, connecting with conductive fibers, allowing a connection to the electric warming current. In instances wherein the carbon fiber of the tank is excessively conductive, conductive filler is mixed into the resin (epoxy) forming the tank is effective to reduce the resistance. Usually the resin will have a very high electrical resistance. Similarly, variations in the proportional mixture of conductive fiber and the carbon fiber are effective to reduce the resistance. In instances where the tank includes a metal liner, the metal liner has much lower resistance than the carbon layer and will produce an electrical short. An electrical isolation layer between the tank carbon fiber and the metal liner will prevent an electrical short from occurring.

In Example 11 only a small change in tank design is required and higher heating efficiency will result compared with an external heater system because the tank itself is heated up directly. Fiber composite high pressure storage tanks are formed from extending fiber strands, filler, and other materials embedded in a resin foundation. The invention provides a heating system for a fiber composite high pressure gas storage tank whereby the temperature of the gas within the tank and the gas flow components associated with the tank gas flow control system at one or more boss assembly at the tank ends are maintained above the lower temperature design tolerance limit for the tank and boss assembly. In the invention, the tank wall is formed from a polymeric binder having embedded therein longitudinally extending electrically conductive and resistive fiber material strands and an electric power source is interconnected with the conductive and resistive fibers forming the tank wall.

The electrically conductive and resistive fiber material strands in the tank intrinsically heat the tank and boss assembly system upon the application of an electric current. In examples, 1) electrodes are embedded in the composite fiber composition of the tank wall to define an electrically resistive path for current flow within the conductive fiber materials of the tank wall; 2) conductive metal bosses at either end of the tank are connected to an electrical power source providing a flow of warming current to the conductive shell; 3) an electric power source is interconnected to electrically conductive fiber extension elements intrinsically formed in the tank shell and lead from the conductive composite tank shell at each of the opposite sides of the tank ends to an interconnection with an electrical power source. When a metal boss is at either or both ends of the tank and a tank wall has an interior metal liner; an insulating layer sandwiched between the conductive fiber composite tank shell structure and the metal liner is provided wherein the insulating layer isolates the conductive wall of the tank from the electrically conductive fiber wall and the one or more metal boss from the flow of electric current.

A temperature control system utilizing temperature sensors may be utilized in embodiments of the invention to provide temperature stabilization. Measurement data is input into the control system for one or more of valve temperature, tank wall temperature, gas temperature and ambient temperature. The control temperature maintained by the system, as determined by the flow of electric current into the fiber components of the tank is such that the gas temperature and the temperature of the metal components associated with the tank does not drop below the lower tolerance temperature limit of the tank and the components associated with the tank gas flow control system at the one or more boss at the tank ends.

Electrically conductive materials forming the tank wall include a filler comprised of a metal powder composition; the powder composition may include one or more of aluminum, copper, nickel, silver, stainless steel, and titanium (Al, Cu, Ni, Ag, SUS, and Ti) powders, a carbon black powder, ceramic powder, and plastic powder coated with an electrically conductive metal. Preferred electrically conductive materials used in forming the tank wall include a filler that is usually a powder composition characterized by an average particle size diameter ranging from about approximately 0.1x10^-6m to about approximately 500x10^-6m. Electrically conductive carbon nano tubes may be embedded in the tank wall composition. Other electrically conductive fiber materials used in forming the tank wall include metal wires and carbon, glass, and plastic fibers coated with metal.

The resistive/conductive properties of the tank wall to which the electric current is applied range from 0.1 ohm to 100 ohm. The electric power source is interconnected with electrodes associated with the tank wall to form an electrically active circuit for current flow and the warming power input into the system. Warming power, P-warming [W], is determined by the tank and gas flow assembly tolerance temperature during the vehicle operation, wherein Warming Power Current (I) is determined by the formula: I-tank= (P-warming / R-tank)^0.5; and Warming Power Voltage (E) is determined by the formula: El-tank= I-tank x R- tank. The electric power source interconnected with the tank wall may be isolated from other electric lines in the vehicle and in such an instance, a DC/DC converter or DC/AC inverter comprises the tank warming power source.

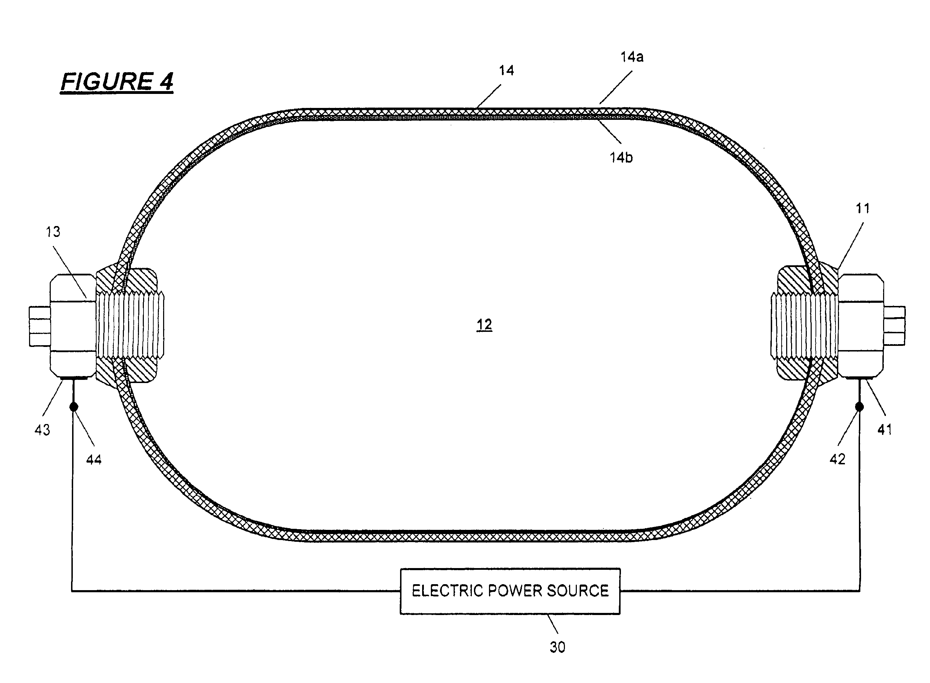

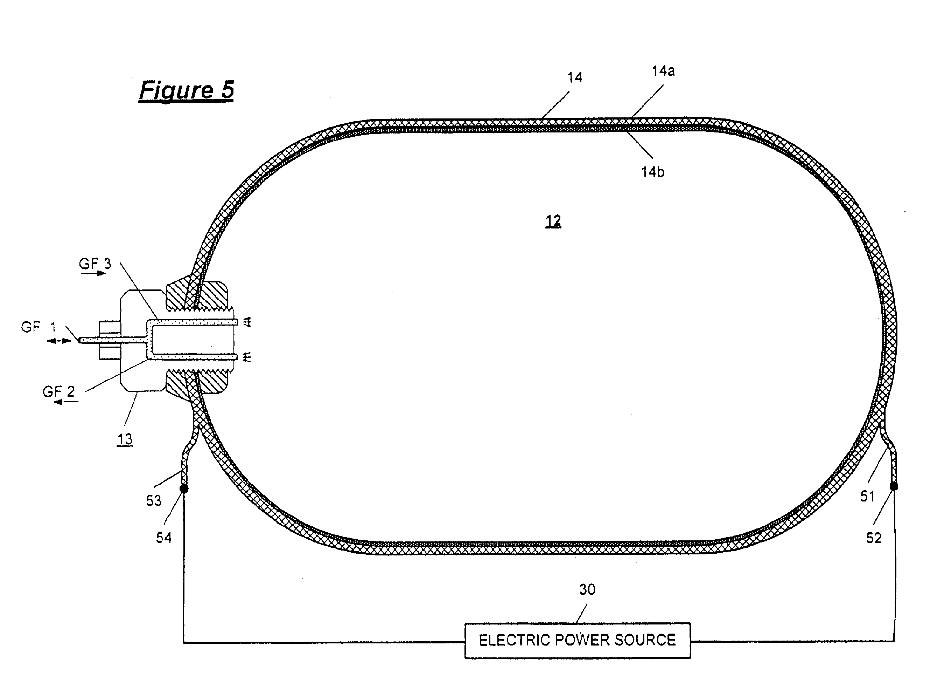

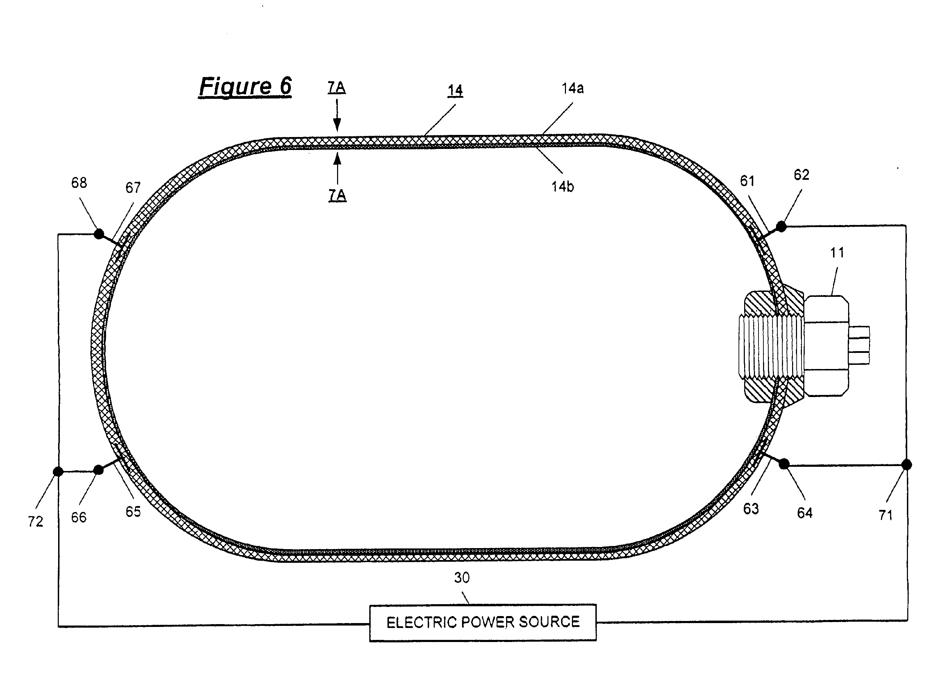

Figure 3 depicts component parts of an example of a heating system: tank 14, composite shell 14a and liner 14b, interior volume for gas storage 12, boss 13, and gas flow conduits: external inlet/outlet conduit GF 1 , internal outlet conduit GF 2 for depletion of gas during driving and internal inlet conduit GF 3 for gas refilling. The gas flow conduits embedded in the boss may also have embedded therein (not shown) check valves, a pressure regulator and control valves in each of GF 2 and GF 3. Electrodes 31 and 33 are embedded in the composite fiber tank wall connecting with conductive/resistive fibers to define an electrically resistive path for current flow within the tank wall for heating the composite shell. The electrodes are connected to terminals 32 and 34 that are in turn connected to an electrical power source 30 providing a flow of warming current to the conductive shell. Figure 4 is a side view of a warming system of the invention wherein the electric power source 30 is interconnected to the conductive metal bosses 11 and 13 extending from opposite ends at either side of the tank. The boss electrodes 41 and 43 are connected to terminals 42 and 44 that are in turn connected to electrical power source 30 providing a flow of warming current to the conductive shell. Figure 5 is a side view of a warming system of the invention wherein an electric power source is interconnected to electrically conductive fiber extension elements 51 and 53 intrinsically formed in the tank shell and leading from the conductive composite tank shell 14a at each of the opposite sides of the tank ends. The intrinsic tank electrodes 51 and 53 are connected to terminals 52 and 54 that are in turn connected to electrical power source 30 providing a flow of warming current to the conductive shell. Figure 6 is a side view of a warming system of the invention wherein electrodes 61, 63, 65, and 67 are implanted within the tank wall at locations predetermined on the tank based on the conductivity properties of the composite material forming the tank. The electrodes are interconnected with an electric power source through terminals 62, 64, 66 and 68 that are in turn connected to electrical power source 30 providing a flow of warming current to the conductive shell.

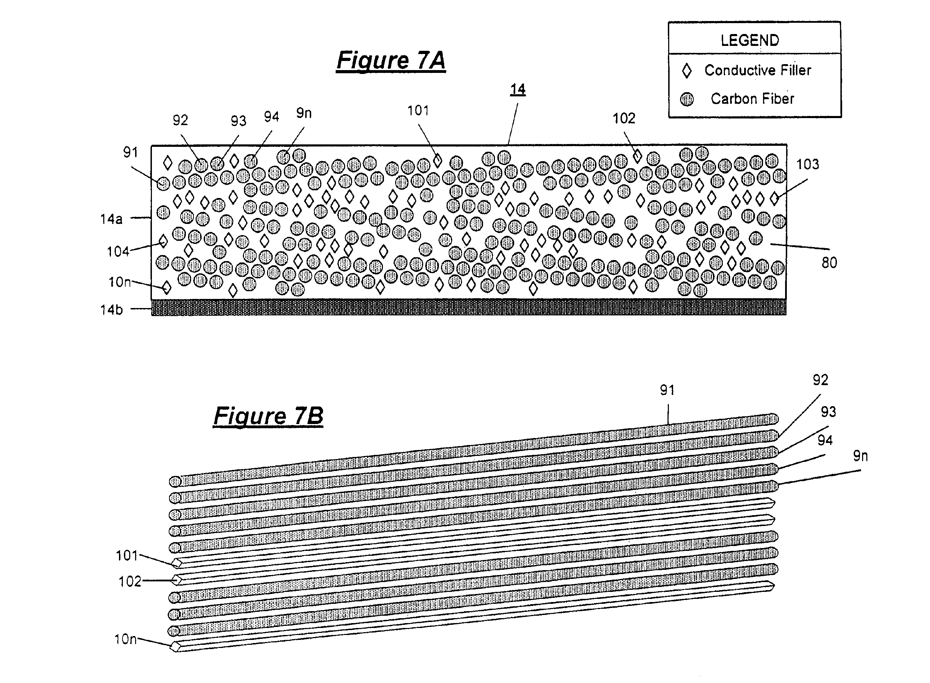

Figure 7A is an enlarged cross section of typical wall section of a tank having an interior liner such as shown in tank wall segment 7A→ ←7A in Figure 6. In Figure 7A, the composite tank shell 14a is shown formed from an epoxy binder 80, having embedded therein longitudinally extending carbon filler fiber material strands 91, 92, 93, 94, 9n and longitudinally extending conductive filler fiber material strands 101, 102, 103, 104, and 10n A solid plastic liner 14b is shown bonded to the interior surface of composite shell 14a. Figure 7B shows enlarged cross sections of a tank wall segment showing an alignment of the filler and fiber strands depicted in Figure 7A.

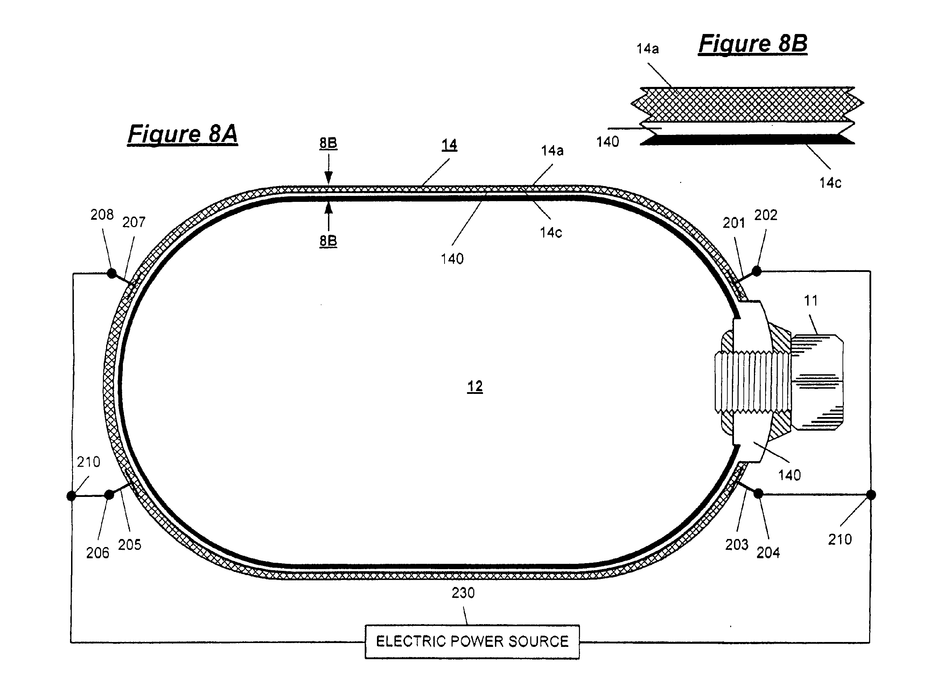

Figure 8A shows, in a side cross section detail, a tank wall 14 including a conductive / resistive composite structure 14a having an interior metal liner 14c with an insulating layer 140 sandwiched between the conductive composite tank structure 14a and the metal liner 14c. In Figure 8A, the warming system of the invention includes electrodes 201, 203, 205, and 207 implanted within the tank wall. The electrodes are interconnected with an electric power source 230 through terminals 202, 204, 206 and 208 that are in turn connected to electrical power source 230 providing a flow of warming current to the conductive shell. The insulating layer 140 isolates both the conductive wall of the tank 14a from the electrically conductive tank wall 14a and the metal boss 11 from the flow of electric current to prevent a shorting condition.

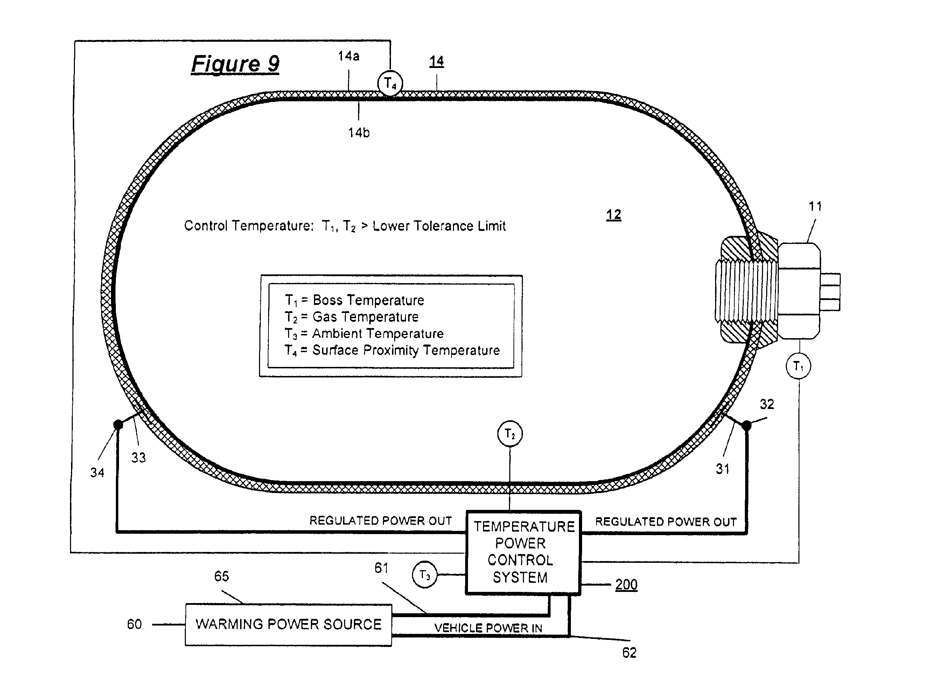

Figure 9 illustrates a temperature control system utilized in the invention useful with embodiments of the invention. The temperature control system may be utilized for overall temperature monitoring and regulation of the tank and gas flow components. In the example in Figure 9, sensors measure T₁ = Boss Temperature; T₂ = Gas Temperature; T₃ = Ambient Temperature; and T₄ = Surface Proximity Temperature. The sensed temperatures are input into the control system 200 regulating overall gas and tank temperature such that the Control Temperature, generated by the warming system, as regulated by the control processor 200 is: T₁, T₂ > Lower Tolerance Limit of the tank and valve components. Control processor 200 regulates the energy flow from the warming power source 65 input into the supplemental warming system, which may be either an electrical system or a fluid system, interconnected to the tank at energy input connectors 61 and 62. With reference to Figure 2 showing temperatures in various operating modes, the control system 200 will provide warming to the system such that the temperature differences shown as Difference T, 25 and 26, Difference are eliminated and the lower tolerance limit of the system is not exceeded.

With reference to Figure 7A and Figure 7B, preferred electrically conductive materials used in forming the tank wall include a filler that is usually a powder or strand composition characterized by an average diameter ranging from about approximately 0.1x10^-6m to about approximately 500x10^-6m. Useful powders include metal powders such as Al, Cu, Ni, Ag, SUS, Ti, and similar metal compositions having like conductive properties and metal plated carbon black, ceramic, and plastic powders. The tank wall fiber component includes wires formed from the aforementioned metals and metal plated fibers such as carbon fibers, glass fibers, plastic fibers and carbon nano tube fibers. Useful resistive/conductive parameters for the expanse of the tank wall heated as determined by the placement of the electrodes connected to the power source range in resistance from 0.1 ohm to 100 ohm.

In the control system depicted in Figure 9, the power source (AC or DC, and respective voltage and current and frequency) is a matter of design choice allowing many variations depending on the optimum design control temperature. Power requirements are calculated in accordance with Ohm's law. Warming power input into the system, P-warming [W], is determined by the tank temperature during the vehicle operation, wherein Current (I) is determined by the formula: I-tank= (P-warming / R-tank)^0.5; Voltage (E) is determined by the formula: El-tank= I-tank x R-tank. From an electrical isolation point, the tank warming power source may be isolated from other electric lines in the vehicle depending on designer preference. In this case, a DC/DC converter or DC/AC inverter must be installed as the tank warming power source.

### EXAMPLE II

In an embodiment, conventionally designed tanks can be used with the invention without any substantial change because of the inherent electromagnetic characteristics of the materials from which the tank and/or liner are formed. Higher heating efficiency is achieved in comparison with an external heater because the tank is heated directly.

Here, the invention includes a tank wall lining formed from one or more metal selected from the group of iron, stainless steel, titanium, magnesium, tin, nickel, zinc, chromium (Fe, SUS, Nichrome®, (a brand name for a non-magnetic alloy of nickel and chromium) or an alloy of the foregoing, and similar inductively active materials or compositions. In examples, a tank lining formed from the inductively active materials or compositions partially surrounds the tank interior volume. In instances where it is expected that the bottom of the tank interior will have a lower temperature, additional inductively active materials or compositions are included in the tank structure at the tank bottom so as to provide additional heat to the bottom area to achieve a more uniform temperature.

Thus, where the typical high pressure gas tank for motor vehicles is formed from a carbon fiber composite shell (carbon fiber resin polymer, "CFRP") and an internal liner is formed from aluminum or plastic, the invention allows minor variations in tank composition to achieve tank heating; a minor change in tank formulation materials is required to obtain induction heating characteristics wherein heat from the induction heater results from eddy currents generated in the material. Preferred characteristics of tank components include the electrical and electromagnetic characteristics of the tank and shell wherein one or both of the shell and the liner require only an electrical resistance. As examples, a plastic liner will have a non-conductive resistance in the range of over 10^6 ohm*m. In contrast, an aluminum liner will have a resistance of about 2.65 x 10^ -8 ohm*m. The carbon fiber resin polymer shell will have a resistance of 1-2 x10 ^ -5 ohm*m. AC current frequency to the induction coil in the invention will be in the range of 20Hz to 50kHz.

To adapt the tank to the induction heating system of the invention, the preferred composite materials and their characteristics are that a) the shell is made electrically non-conductive; b) the shell is made ferromagnetically active; and/or c) the liner is made ferromagnetically active. In this regard, for the liner, aluminum is too low in electrical resistance to be heated up. Plastic is too high in electrical resistance to be heated up.

In Example II, a CFRP shell is a useful material in the invention without any change when used with inductively active components. The CFRP shell composition may be modified, however, to achieve induction heating characteristics by the addition in the fabrication process of a fiber, such as a steel wool strand, or a powder (iron) which has ferromagnetic or conductive properties.

Figure 10A and Figure 10B show an example of the invention wherein induction heating warms either the composite shell 114a or the metal liner 114b, or both of the fiber composite gas tank 114. In Figure 10A, component parts of an example of a complete tank system are shown: tank 114, composite shell 114a and liner 114b, interior volume for gas storage 12, boss 110 and gas flow conduits, external inlet 340 for gas refueling and external outlet conduit 350 for depletion of gas during driving. The gas flow conduits embedded in the metal boss may also have embedded therein (not shown) one or more of check valves, a pressure regulator and control valves in each of conduits 340 and 350 for regulating gas pressure and direction of flow. Induction coil 250 is wound around the external diameter of the tank and connected through terminals 240 and 260 to an electrical power source 300 on the vehicle providing a flow of current to the induction coil for warming the tank components 114a or 114b, depending on their electromagnetic characteristics when subjected to the electromagnetic field created by the activated induction coil 250. Figure 10B is a detail of a section of tank wall, 10B in Figure 10A, showing the individual electrically conductive wire strands 250a, 250b, 250c, 25Ox, ..., formed from an electrically conductive core wire 25Ow insulated by sheath 25Oi, wound around the tank.

Figure 11A is a side view of a warming system of the invention wherein the induction coil 250 is embedded within the fiber composite layer of the tank wall interconnected with an on board electrical power source 300 through terminals 240 and 260. Figure 11B is a cross section of the longitudinally extending side of the tank wall in Figure 4A indicated as HB→ ←HB. The induction current warms the tank components, shell 114a or liner 114b, depending on their electromagnetic characteristics, when subjected to the electromagnetic field created by the activated induction coil 250.

Figure 12A is a cross section view of an example of a warming system of the invention wherein the induction coil 250 is wound around the external diameter of a tank that includes a non conductive, both electrically and electromagnetically, outer composite shell 114a and an electromagnetically active ferrous metal liner 114c. Figure 12B is a cross section of a side of the tank wall in Figure 12A indicated as 12B→ ←12B showing the induction coil, fiber tank shell and metal liner.

Figure 12B depicts a section detail of tank wall, 12B, in Figure 12A, showing the individual electrically conductive, insulated wire strands 250a, 250b, 250c, 250k, ... wound around the tank outer shell with the insulation 25Oi and the conductive core 25Ow also shown.

Figure 13 illustrates a temperature control system utilized in the invention showing the heating system of Figure 10A as an example wherein temperature sensors T₁ (boss), T₂ (gas), T₃ (ambient), and T₄ (Surface coil) provide temperature measurement input into the control system 200, respectively for valve and boss temperature T₁ gas temperature in the tank T₂ volume 12, ambient temperature T₃, and tank surface proximity temperature T₄. Temperature control system 200 maintains the flow of electric power from the on board source 300 to the wired coil electrodes 240 and 260 that generate the heating effect. Power is regulated such that "Control Temperature: T₁, T₂ > Lower Tolerance Limit [of the tank and valve system]". With reference to Figure 2 showing tank and valve system temperatures in various operating modes for the vehicle, the control system 200 will heat the system such that the temperature differentials shown as Difference t, 25 and 26, Difference in Figure 2 are eliminated and the lower tolerance limit, Limit T, of the system is not exceeded.

Thus, induction heat warms the gas tank itself and an internal induction coil can work as well or better. Because the metal liner or carbon layer has an electromagnetic characteristic, each can be heated up by the Induction heating coil. Conventional tanks can be used without significant change in design, provided that the electromagnetic characteristics are consistent with the teachings of the examples set out above. Higher heating efficiency than an external heater is achieved because the tank itself is heated directly. The on board electrical power source system for providing an alternating current to the induction coil is electrically isolated from the tank. Thus in the invention, induction current flow heats the electromagnetic or ferromagnetic active elements of the tank construction in which eddy currents are generated within the tank materials and the intrinsic resistance or conductivity of the tank or liner, or both, leads to Joule heating. The coil around the tank produces an electromagnetic field when a high- frequency alternating current (AC) is passed through the coil from the on board power source. Preferably, the on board power source comprises an AC power supply that produces a high frequency of low voltage and high current. Useful frequencies include alternating currents in the range of 20Hz to 50kHz. The number of turns of the induction coil influences the efficiency and field pattern of the warming effect desired.

In Figure 14A, a cross section of an alternately formed tank wall composition useful in the invention is shown wherein conventional CFRP shell 114a and plastic liner 114b form a tank structure surrounded by induction coil 250 and a sheet, foil, mesh or fiber, 114 liner, interior lining is provided as an inductively active heating element. In the application of the induction current, a lower frequency electromagnetic field can penetrate through the tank wall; the field strength is partly diminished by absorption in the CFRP. The remaining induction energy can work inside of the tank heating interior lining 114 liner. The lining to be heated in the tank is preferably formed from Fe, SUS, Nichrome®, Ti, Mn, Sn, Ni, Zn, Cr, an alloy of the foregoing, and similar inductively active materials or compositions. Figure 14B depicts a tank structure wherein the lining, 114 liner, to be heated in the tank is formed from the inductively active materials or compositions and, for example, if cylindrical in shape, partially surrounds the tank interior volume. It is expected that the bottom of the tank interior will usually have a lower temperature. In Figure 14C, additional inductively active materials or compositions are included in the tank structure at the tank bottom, e.g., 114 liner, to provide additional heat to the bottom area to achieve a more uniform temperature.

Thus, where the typical high pressure gas tank for motor vehicles is formed from a carbon fiber composite shell (carbon fiber resin polymer, "CFRP") and an internal liner usually formed from aluminum or plastic, the invention allows minor variations in tank composition or limited additions to liner configuration to achieve tank heating. Where, in the typical tank, there is no ferromagnetic material in the tank, in a first instance, a minor change in tank formulation materials is required to obtain induction heating characteristics wherein heat from the induction heater results from eddy currents generated in the material. In a second instance, a separate liner adapts the tank to induction heating. The preferred induction materials and their characteristics are that a) the shell is made electrically non-conductive; b) the shell is made ferromagnetically active; and/or c) the liner is made ferromagnetically active. In this regard, aluminum pre se is too low in electrical resistance to be heated up; the electrical resistance of plastic *per se* is too high to be heated up. A CFRP shell composition may be modified, however, to achieve induction heating characteristics by the addition in the fabrication process of a fiber, such as a steel wool strand, or a powder (iron) which has ferromagnetic or conductive properties. Preferred powder materials used in forming the tank wall include a filler that is usually a powder composition characterized by an average particle size diameter ranging from about approximately 0.1x10^-6m to about approximately 500x10^-6m. Where a separate liner is involved, the lining is preferably formed from Fe, SUS, Nichrome®, Ti, Mn, Sn, Ni, Zn, Cr, an alloy of the foregoing, or similar inductively active materials or compositions.

### EXAMPLE III

In this example, the invention provides a warming system for a high pressure hydrogen gas storage tank utilizing Joule Thompson energy. The recovered / captured Joule Thomson heat is conveyed from a heat exchange device, HEX, through a heat pipe, coolant circulator, or like heat transfer conduit, to an internal radiator or HEX wherein recovered Joule Thomson heat is radiated and warms the remaining gas stored in the tank.

In brief, Example III provides a warming system for a high pressure hydrogen gas storage tank utilizing Joule Thompson energy in vehicles powered by powered by hydrogen gas. The invention provides a solution that warms the storage tank system by recovering the Joule Thomson energy stored in hydrogen consumed when the H₂ gas is refilled to a high pressure, such as 30-35 MPa. As illustrated in Figure 1A, when the gas is decompressed to IMPa during use, Joule Thomson energy is recovered as heat for warming the remaining gas and/or tank assembly components.

Figure 15 depicts the structure of an example of a Joule Thomson warming system: a tank 140, formed from a carbon fiber resin composite shell 140a and liner 140b, an interior volume for gas storage **120,** boss **110,** and gas outflow conduit 110 out. In the example of Figure 15, the gas stored under high pressure, 30-35 MPa, in the tank volume flows through conduit **GF** to pressure regulator **PR** and internal heat exchanger 311, where the Joule Thompson heat energy is released into the tank gas as the hydrogen is depleted from the tank.

### Heat flow is shown by the arrows

In Figure 16, an example of the warming system of the invention at a tank boss 41 at one end of the tank is shown in a side view. In this example, gas flow outlet conduit **GF** leads from the tank interior 41, where initial pressure is 35 MPa through pressure regulator **PR,** also embedded in the tank boss, for heat exchange between the decompressed gas and the boss, nut, port, or tank, as the pressure regulated 1 MPa gas flows to the vehicle power plant.

In Figure 17, an external heat exchanger and an internal heat exchanger are utilized in a further example of the warming system of the invention. Gas flow outlet conduit **GF 5** leads from the tank interior volume **120,** where initial pressure is 35 MPa, and flow is directed in the conduit through boss 510 to external pressure regulator **PR.** After pressure regulator **PR** hydrogen gas flowing to the vehicle power plant has a pressure of 1 MPa. Intermediate in the gas flow conduit GF 5, between the regulator PR and the gas outlet to the vehicle 520 is a heat transfer system, including heat exchange device 530, conveying heat captured from GF 5 to the tank interior 120 where the heat captured is radiated to the remaining high pressure gas stored therein. The recovered / captured Joule Thomson heat is conveyed from HEX 530 through a heat pipe, coolant circulator, or like heat transfer conduit, HTC, to internal radiator or HEX 540 wherein the recovered heat is radiated and warms the remaining gas stored in the tank.

Thus, the system of Example III recycles heat recovered from the mechanical energy of gas compression stored in the gas during the refill process for use as a warming agent for gas remaining in the tank as the gas is consumed. The system of the invention may be used with a supplemental heating system such as described in Example I and Example II described above.

Both Joule Thomson heating and a supplemental warming system may be utilized for overall temperature regulation. A temperature power control system is shown in Figure 18. In the example of Figure 18, sensors measure T₁= Boss Temperature; T₂ = Gas Temperature; T₃ = Ambient Temperature; and T₄ = Surface Proximity Temperature. The sensed temperatures are input into the temperature power control system 200 that regulates power input into the supplemental system and thereby regulates overall gas and tank temperature such that the Control Temperature, generated by Joule Thomson heating and the supplemental warming system, regulated by the control processor system 200, is: T₁ and T₂ > Lower Tolerance Limit of the tank and valve components. Control system 200 regulates the energy flow from the warming power source 60 input into the supplemental warming system. The supplemental warming may be provided as either an electrical system or a fluid system, interconnected to the tank at regulated power energy input connectors 61 and 62. With reference to Figure 2 showing temperatures in various operating modes, the control system 200 maintains the system temperatures such that the temperature differentials shown are eliminated and the lower tolerance limit of the system is not exceeded.

### INDUSTRIAL APPLICABILITY

High pressure CNG or hydrogen gas fueled vehicles powered by engines or fuel cells require an extended driving range, achieved by increasing the quantity of fuel stored in an on board tank. As the quantity of fuel stored is increased, pressure of gas within the tank likewise increases. Temperature fluctuations occur inside and outside on board tanks, that, along with pressure variations occurring during tank refill and depletion and cause mechanical stress in the tank system as a result of the expansion and contraction of the physical components that comprise the tank and any in situ thermal management (heat exchanger) and/or gas flow devices (valves and regulators) that may be installed therein. The decompression of gas as a tank is depleted lowers temperature and produces stress. Additionally, cold temperature, by itself, may induce internal or external leaks. The thermal warming and temperature control system described and claimed is useful to promote gas flow and relieve stresses induced within the tank by the effects of gas heating during refill, gas cooling during tank depletion, and environmental temperature fluctuations. The invention enhances the integrity and durability of the tank system assembly and the gas flow control system associated with the tank assembly.
The disclosure of this specification also includes the following clauses numbered 1 through 31:
Clause 1: A heating system for a fiber composite high pressure gas storage tank for maintaining the temperature of the gas within the tank and the gas flow components associated with the tank gas flow control system at one or more boss assembly at the tank ends above the lower temperature design tolerance limit for the tank and boss assembly comprising warming the tank and the flow control system physically associated with the tank assembly by warming the tank and/or the gas therein by 1) heating the tank itself by passing an electrical current through a resistive structural material from which the tank is formed, 2) utilizing an electrical induction heating system to warm a metal liner in the tank or the polymer fiber composite forming the tank shell, 3) utilizing the Joule-Thomson effect to recover heat from high pressure gas exhausted from the storage tanks and directing the recovered heat to the gas remaining in the tank and/or 4) combining either or both of heating the tank itself by passing an electrical current through a resistive structural material from which the tank is formed and utilizing an electrical induction heating system to warm a metal liner in the tank or a polymer fiber composite forming the tank shell with a Joule-Thomson effect heater.
Clause 2: A heating system for a fiber composite high pressure gas storage tank for maintaining the temperature of the gas within the tank and the gas flow components associated with the tank gas flow control system at one or more boss assembly at the tank ends above the lower temperature design tolerance limit for the tank and boss assembly comprising a tank formed from a polymeric binder having embedded therein longitudinally extending electrically conductive and resistive fiber material strands and an electric power source interconnected with the conductive and resistive fibers forming the tank wall, whereby the electrically conductive and resistive fiber material strands in the tank intrinsically heat the tank and boss assembly system upon the application of an electric current.
Clause 3: The heating system of clause 2 wherein electrodes are embedded in the composite fiber composition of the tank wall to define an electrically resistive path for current flow within the conductive fiber materials of the tank wall.
Clause 4: The heating system of clause 2 wherein conductive metal bosses at either end of the tank are connected to an electrical power source providing a flow of warming current to the conductive shell.
Clause 5: The heating system of clause 2 wherein an electric power source is interconnected to electrically conductive fiber extension elements intrinsically formed in the tank shell and lead from the conductive composite tank shell at each of the opposite sides of the tank ends to an interconnection with an electrical power source.
Clause 6: The system of clause 4 further including 1) a metal boss at either or both ends of the tank; 2) a tank wall having an interior metal liner; and 3) an insulating layer sandwiched between the conductive fiber composite tank shell structure and the metal liner, wherein the insulating layer isolates the conductive wall of the tank from the electrically conductive fiber wall and the one or more metal boss from the flow of electric current.
Clause 7: The system of clause 2 including a temperature control system utilizing temperature sensors to provide temperature measurement data input into the control system for one or more of valve temperature, tank wall temperature, gas temperature and ambient temperature such that the control temperature maintained by the system, as determined by the flow of electric current into the fiber components of the tank is such that the gas temperature and the temperature of the metal components associated with the tank does not drop below the lower tolerance temperature limit of the tank and the components associated with the tank gas flow control system at the one or more boss at the tank ends.
Clause 8: The warming system of clause 2 wherein electrically conductive materials forming the tank wall include filler comprised of a metal powder, metal wires, carbon fibers, and glass fibers or plastic fibers coated with a metal composition.
Clause 9: The system of clause 8 wherein the metal is comprised of one or more of Al, Cu, Ni, Ag, SUS, and Ti.
Clause 10: The system of clause 8 wherein the powder composition is comprised of one or more of carbon black powder, ceramic powder, carbon nano tubes, and a glass or plastic powder coated with an electrically conductive metal.
Clause 11: The system of clause 2 wherein the resistive/conductive properties of the tank wall to which the electric current is applied range from 0.1 ohm to 100 ohm.
Clause 12: The system of clause 2 including an electric power source interconnected with electrodes associated with the tank wall to form an electrically active circuit for current flow and the warming power input into the system, P-warming [W], is determined by the tank and gas flow assembly tolerance temperature during the vehicle operation, wherein:
   a. Current (I) is determined by the formula: I-tank= (P-warming / R-tank)^0.5;
   b. and
   c. Voltage (E) is determined by the formula: El-tank= I-tank x R-tank.
Clause 13: The system of clause 2 wherein the electric power source interconnected with the tank wall is isolated from other electric lines in the vehicle.
Clause 14: The system of clause 2 wherein a DC/DC converter or DC/AC inverter comprises the tank warming power source.
Clause 15: A warming system for a carbon fiber composite high pressure gas storage tank for maintaining the temperature of the gas within the tank and the gas flow components associated with one or more boss at a tank end above the lower temperature design tolerance limit of the tank and the gas flow components associated with the tank comprising: a resin fiber composite the tank formed from an electromagnetically active fiber material embedded in a polymeric binder, the warming system comprising a coil of conductive wire wound around the diameter of the tank interconnected with a high-frequency alternating current (AC) passed through the coil from an on board power source to produce an electromagnetic field that warms the tank by electromagnetic induction.
Clause 16: An warming system for a fiber composite high pressure gas storage tank for maintaining the temperature of the gas within the tank and the gas flow components associated with one or more boss at the tank ends above the lower temperature design tolerance limit of the tank and associated flow control components comprising: a resin composite tank formed from an external composite shell; an interior liner formed from an electromagnetically active fiber material embedded in a polymeric binder, either or both of the shell and liner being ferromagnetically active, the warming system comprising a coil of conductive wire wound around the diameter of the tank and electrically insulated from the tank interconnected with a high-frequency alternating current (AC) passed through the coil from an on board power source whereby an electromagnetic induction effect warms the material from which the shell, the liner, or both, is formed.
Clause 17: An warming system for a fiber composite high pressure gas storage tank for maintaining the temperature of the gas within the tank and the gas flow components associated with one or more boss at the tank ends above the lower temperature design tolerance limit of the tank and gas flow control components comprising: a tank formed from an electrically insulating fiber material embedded in a polymeric binder; a ferromagnetic metal liner within the tank interior; and a warming system comprising a coil of conductive wire wound around the outside diameter of the tank interconnected with a high-frequency alternating current (AC) passed through the coil from an on board power source to produce an electromagnetic field that warms the metal liner.
Clause 18: The system of clause 15 or clause 16 or clause 17 including a temperature control system, the control system interconnected with the power source and the coil, the control system further interconnected with temperature sensors to provide temperature measurement data input into the control system for one or more of valve temperature, gas temperature, tank temperature, and ambient temperature such that the control temperature of the tank and flow control components maintained by the system, as determined by the flow of electric current into the coil is such that the gas temperature and the temperature of the tank and associated gas flow control components does not drop below the lower tolerance temperature limit of the tank and associated gas flow control components.
Clause 19: The system of clause 15 including a tank wall lining formed from one or more metal selected from the group of iron, stainless steel, titanium, magnesium, tin, nickel, zinc, chromium (Fe, SUS, Ti, Mn, Sn, Ni, Zn, Cr) and an alloy of the foregoing.
Clause 20: The system of clause 15 wherein the bottom of the tank interior includes a partial liner corresponding to the bottom tank surface formed from additional inductively active materials or compositions are included in the tank structure at the tank bottom.
Clause 21: The system of clause 15 including a plastic liner having a non-conductive resistance in the range of over 10^6 ohm*m.
Clause 22: The system of clause 15 including a metal liner having a resistance of approximately 2.65 x 10^ -8 ohm*m.
Clause 23: The system of clause 15 wherein a carbon fiber resin polymer shell forming a tank wall has a resistance of 1-2 x10 ^ -5 ohm*m.
Clause 24: The system of clause 15 an AC current frequency provided to the induction coil is in the range of 20Hz to 50kHz.
Clause 25: The system of clause 15 wherein a) the tank shell is electrically non- conductive; b) the shell is ferromagnetically active; and c) the liner is ferromagnetically active.
Clause 26: The system of clause 15 wherein the tank shell includes one or more of a steel wool strand, or an iron powder having ferromagnetic properties.
Clause 27: A warming system for hydrogen gas stored under high pressure in an on board motor vehicle tank for increasing the temperature of the gas within the tank and the gas flow control components associated with one or more boss at an end of the tank to a level above the lower design temperature tolerance limit of the tank and flow control components comprising: a high pressure hydrogen gas storage tank; a conduit for gas flow leading from high pressure gas stored in the tank to a pressure regulator that reduces the pressure of the gas flowing in the conduit to a level suitable for use in the vehicle power plant; and a heat exchange device operatively interconnected with the conduit for gas flow disposed after the pressure regulator and before the gas inlet to the vehicle power plant, whereby the Joule-Thomson effect in gas flowing through the conduit is captured as heat and the heat captured is utilized to warm the gas within the tank and/or the flow control components of the tank assembly as the high pressure hydrogen gas is utilized during vehicle operation.
Clause 28: The system of clause 27 wherein the gas flow conduit, the pressure regulator and the heat exchange device are embedded in a boss at one end of the tank.
Clause 29: The system of clause 27 wherein a) a gas flow conduit leads from the tank interior volume and passes through a pressure regulator external to the tank, b) the gas flow conduit leads through a heat transfer system where captured Joule Thomson heat is recovered; c) a heat transfer device from the heat transfer system conveys the captured heat back through the boss to the tank interior; and d) the system further includes a radiator in the tank interior interconnected with a gas flow conduit interconnected with the heat transfer system; whereby the captured Joule Thomson heat is radiated in the tank interior.
Clause 30: The warming system of clause 29 wherein the heat transfer device from the heat transfer system comprises one of a heat pipe and a coolant circulator.
Clause 31: The system of clause 27 including a temperature control system comprising: temperature sensors to provide measurement of temperature data for input into the control system, the sensors measuring one or more of tank temperature, valve temperature, gas temperature, and ambient temperature; and the temperature control system determining a warming control temperature such that the temperature of the gas in the tank and the flow control components associated with the tank does not drop below the lower tolerance temperature limit of the tank and flow control components associated with the tank.

## Claims

1. A warming system for hydrogen gas stored under high pressure in an on board motor vehicle tank for increasing the temperature of the gas within the tank and the gas flow control components associated with one or more boss at an end of the tank to a level above the lower design temperature tolerance limit of the tank and flow control components comprising:
a high pressure hydrogen gas storage tank; a conduit for gas flow leading from high pressure gas stored in the tank to a pressure regulator that reduces the pressure of the gas flowing in the conduit to a level suitable for use in the vehicle power plant; and a heat exchange device operatively interconnected with the conduit for gas flow disposed after the pressure regulator and before the gas inlet to the vehicle power plant, whereby the Joule-Thomson effect in gas flowing through the conduit is captured as heat and the heat captured is utilized to warm the gas within the tank and/or the flow control components of the tank assembly as the high pressure hydrogen gas is utilized during vehicle operation.

2. The system of claim 1 wherein the gas flow conduit, the pressure regulator and the heat exchange device are embedded in a boss at one end of the tank.

3. The system of claim 1 wherein a) a gas flow conduit leads from the tank interior volume and passes through a pressure regulator external to the tank, b) the gas flow conduit leads through a heat transfer system where captured Joule Thomson heat is recovered; c) a heat transfer device from the heat transfer system conveys the captured heat back through the boss to the tank interior; and d) the system further includes a radiator in the tank interior interconnected with a gas flow conduit interconnected with the heat transfer system; whereby the captured Joule Thomson heat is radiated in the tank interior.

4. The warming system of claim 3 wherein the heat transfer device from the heat transfer system comprises one of a heat pipe and a coolant circulator.

5. The system of claim 1 including a temperature control system comprising: temperature sensors to provide measurement of temperature data for input into the control system, the sensors measuring one or more of tank temperature, valve temperature, gas temperature, and ambient temperature; and the temperature control system determining a warming control temperature such that the temperature of the gas in the tank and the flow control components associated with the tank does not drop below the lower tolerance temperature limit of the tank and flow control components associated with the tank.
